# EUROPEAN PATENT SPECIFICATION

(11) **EP 2 705 675 B1**
(45) Date of publication and mention of the grant of the patent: **17.02.2021**
(21) Application number: 11717646.1
(22) Date of filing: 04.05.2011
(51) Int. Cl.: H04R 25/00, G09B 21/00, H04B 1/38, H04W 72/10, H04B 1/3827, H04R 1/10, H04W 28/18

(54) **SELF-LEARNING HEARING ASSISTANCE SYSTEM AND METHOD OF OPERATING THE SAME**
SELBSTLERNENDES HÖRHILFESYSTEM UND BETRIEBSVERFAHREN DAFÜR
SYSTÈME D'AIDE AUDITIVE À APPRENTISSAGE AUTOMATIQUE ET SON PROCÉDÉ DE FONCTIONNEMENT

(43) Date of publication of application: 12.03.2014
(73) Proprietor: Sonova AG, 8712 Stäfa (CH)
(72) Inventor: MÜLDER, Hans, CH-3184 Wünnewil (CH); GOLDBECK, Felix, CH-1796 Courgevaux (CH); JOST, Timothée, CH-2000 Neuchâtel (CH); PLATZ, Rainer, CH-2013 Colombier (CH); SCHMID, Christoph, CH-3086 Zimmerwald (CH)
(74) Representative: Schwan Schorer & Partner mbB
(86) International application number: PCT/EP2011/057117
(87) International publication number: WO 2011/083181

(56) References cited:
- WO-A1-2008/052576

## Description

The invention relates to a system and a method for providing sound to at least one user, wherein audio signals from an audio signal source, such as a microphone for capturing a speaker's voice, are transmitted via a wireless link to a receiver unit, such as an audio receiver for a hearing aid, from where the audio signals are supplied to means for stimulating the hearing of the user, such as a hearing aid loudspeaker.

Typically, wireless microphones are used by teachers teaching hearing impaired persons in a classroom (wherein the audio signals captured by the wireless microphone of the teacher are transmitted to a plurality of receiver units worn by the hearing impaired persons listening to the teacher) or in cases where one or several persons are speaking to a hearing impaired person (for example, in a professional meeting, wherein one or each speaker is provided with a wireless microphone and with the receiver units of the hearing impaired person receiving audio signals from all wireless microphones). Another example is audio tour guiding, wherein the guide uses a wireless microphone.

Another typical application of wireless audio systems is the case in which the transmission unit is designed as an assistive listening device. In this case, the transmission unit may include a wireless microphone for capturing ambient sound, in particular from a speaker close to the user, and/or a gateway to an external audio device, such as a mobile phone; here the transmission unit usually only serves to supply wireless audio signals to the receiver unit(s) worn by the user.

Typically, the wireless audio link is an FM (frequency modulation) radio link operating in the 200 MHz frequency band. Examples for analog wireless FM systems, particularly suited for school applications, are described in EP 1 864 320 A1 and WO 2008/138365 A1.

In recent systems the analog FM transmission technology is replaced by employing digital modulation techniques for audio signal transmission, most of them working on other frequency bands than the former 200 MHz band.

US 2005/0195996 A1 relates to a hearing assistance system comprise a plurality of wireless microphones worn by different speakers and a receiver unit worn at a loop around a listener's neck, with the sound being generated by a headphone connected to the receiver unit, wherein the audio signals are transmitted from the microphones to the receiver unit by using a spread spectrum digital signals. The receiver unit controls the transmission of data, and it also controls the pre-amplification gain level applied in each transmission unit by sending respective control signals via the wireless link.

WO 2008/098590 A1 relates to a hearing assistance system comprising a transmission unit having at least two spaced apart microphones, wherein a separate audio signal channel is dedicated to each microphone, and wherein at least one of the two receiver units worn by the user at the two ears is able to receive both channels and to perform audio signal processing at ear level, such as acoustic beam forming, by taking into account both channels.

In wireless digital sound transmission systems not only audio data is to be transmitted but also control data, for example for controlling the volume of playback of audio signals, for configuring the operation mode of the devices, for querying the battery status of the devices, etc. The transmission of such control data causes, compared to audio data transmission alone, an overhead to the system in current consumption and/or delay which should be minimized.

US 2010/0220879 A1 relates to a hearing aid comprising a user control for allowing the user to adjust the settings of the audio signal processing in the hearing aid, wherein adjustment data is derived from the operation of such user control and is logged in the hearing aid in order to adjust the default parameter settings of the audio signal processing according to such adjustment data, with the volume setting being mentioned as an example. A similar hearing aid is known from US 2004/0190739 A1, which may be realized as a binaural hearing device including a wireless link between the two hearing aids. Another hearing aid including a user operation data logging for parameter adjustment is known from US 2006/0222194 A1.

WO 2008/052576 A1 relates to a hearing assistance system comprising an FM transmission unit which is provided with data logging capability in order to allow for improved counseling and training of the user of the system. The logged data may include the auditory scene categories determined by a classification unit as a function of time and/or the time when monitoring of the receiver unit was requested; also data concerning the total time of use of the various operation modes of the receiver unit may be logged in the transmission unit.

US 2010/0172526 A1 relates to a FM audio signal transmission system comprising at least one interface unit and at least one adjustable device, wherein the interface unit may be an audio signal FM transmission unit and wherein the adjustable device may be an FM receiver, and wherein the interface unit may transmit data logged within the interface unit to a control unit from where it may be collected for evaluation in a central database. Based on such evaluation, an updated optimum configuration may be made available in the control unit for download into the interface unit and/or the adjustable device.

Wireless audio signal transmission units, such as FM transmission units, may include quite a number of functions, thereby resulting in a relatively high complexity in the user interface, in the communication between manufacturer and fitter and between fitter and end user, and in the usage by the end user. While handling of such devices usually is assisted by automatic control functions, such as automatic context-dependent signal processing, such automatic choices will not be correct in all use cases for all users, and some settings may enjoy a user preference but cannot be determined by such automated context analysis.

It is an object of the invention to provide for a method of operating a hearing assistance system which allows for particularly convenient operation by the user, while achieving operation of the system close to the individual preferences of the user. It is a further object to provide for such a hearing assistance system.

According to the invention, these objects are achieved by a method as defined in claim 1 and a system as defined in claim 15, respectively.

The invention is beneficial in that, by providing for a self-learning feature by logging user preference data by recording data concerning the manual operation of the user interface of the transmission unit and by recording data concerning the respective use situation of the transmission unit, evaluating, in the transmission unit, the logged user preference data in order to extract user preferences concerning the use of the transmission unit, and adjusting, in the transmission unit, the stored default values of the setting of at least one operating parameter of the transmission unit according to the extracted user preferences, an automatic adjustment of the default settings of the transmission unit for specific use situations to the preferences of the individual user can be achieved, thereby achieving convenient individual adjustment of the hearing assistance system.

Preferred embodiments of the invention are defined in the dependent claims.

Hereinafter, the invention will be illustrated by reference to the attached drawings, wherein:
- Fig. 1: is a schematic view of audio components which can be used with a system illustrating the invention;
- Figs. 2 to 4: are schematic views of a use of various examples of a system illustrating the invention;
- Fig. 5: is a block diagram of an example of a transmission unit which may be used with the invention; and
- Fig. 6: is a block diagram of an example of a receiver unit which may be used with the invention.

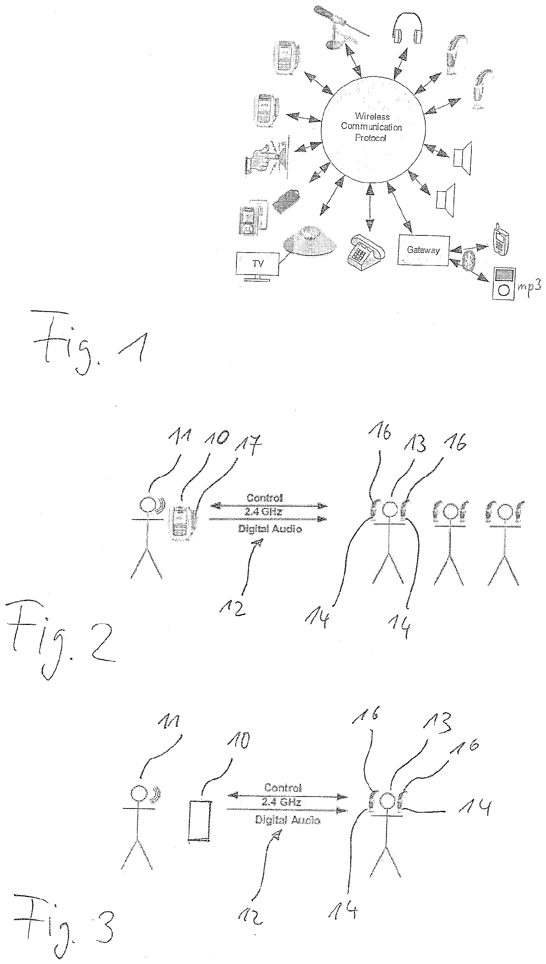

As shown in Fig. 1, the device used on the transmission side may be, for example, a wireless microphone used by a speaker in a room for an audience; an audio transmitter having an integrated or a cable-connected microphone which are used by teachers in a classroom for hearing-impaired pupils/students; an acoustic alarm system, like a door bell, a fire alarm or a baby monitor; an audio or video player; a television device; a telephone device; a gateway to audio sources like a mobile phone, music player; etc. The transmission devices include body-worn devices as well as fixed devices. The devices on the receiver side include headphones, all kinds of hearing aids, ear pieces, such as for prompting devices in studio applications or for covert communication systems, and room loudspeaker systems. The receiver devices may be for hearing-impaired persons or for normal-hearing persons. Also on the receiver side a gateway could be used which relays audio signal received via a digital link to another device comprising the stimulation means.

The system may include a plurality of devices on the transmission side and a plurality of devices on the receiver side, for implementing a network architecture, usually in a masterslave topology. Alternatively, the system may comprises a single transmission unit and one receiver unit for each ear of the user.

The transmission unit typically comprises or is connected to a microphone for capturing audio signals, which is typically worn by a user, with the voice of the user being transmitted via the wireless audio link to the receiver unit.

The receiver unit typically is connected to a hearing aid via an audio shoe or is integrated within a hearing aid.

In addition to the audio signals, usually also control data is transmitted uni-directionally or bidirectionally between the transmission unit and the receiver unit. Such control data may include, for example, volume control or a query (i.e. a polling signal) regarding the status of the receiver unit or the device connected to the receiver unit (for example, battery state and parameter settings).

The wireless link between the transmission unit and the receiver unit could be digital or analog (typically FM).

In Fig. 2 a typical use case is shown schematically, wherein a body-worn transmission unit 10 comprising a microphone 17 is used by a teacher 11 in a classroom for transmitting audio signals corresponding to the teacher's voice via a digital link 12 to a plurality of receiver units 14, which are integrated within or connected to hearing aids 16 worn by hearing-impaired pupils/students 13. The digital link 12 is also used to exchange control data between the transmission unit 10 and the receiver units 14. Typically, the transmission unit 10 is used in a broadcast mode, i.e. the same signals are sent to all receiver units 14.

Another typical use case is shown in Fig. 3, wherein a transmission 10 having an integrated microphone is used by a hearing-impaired person 13 wearing receiver units 14 connected to or integrated within a hearing aid 16 for capturing the voice of a person 11 speaking to the person 13. The captured audio signals are transmitted via the digital link 12 to the receiver units 14.

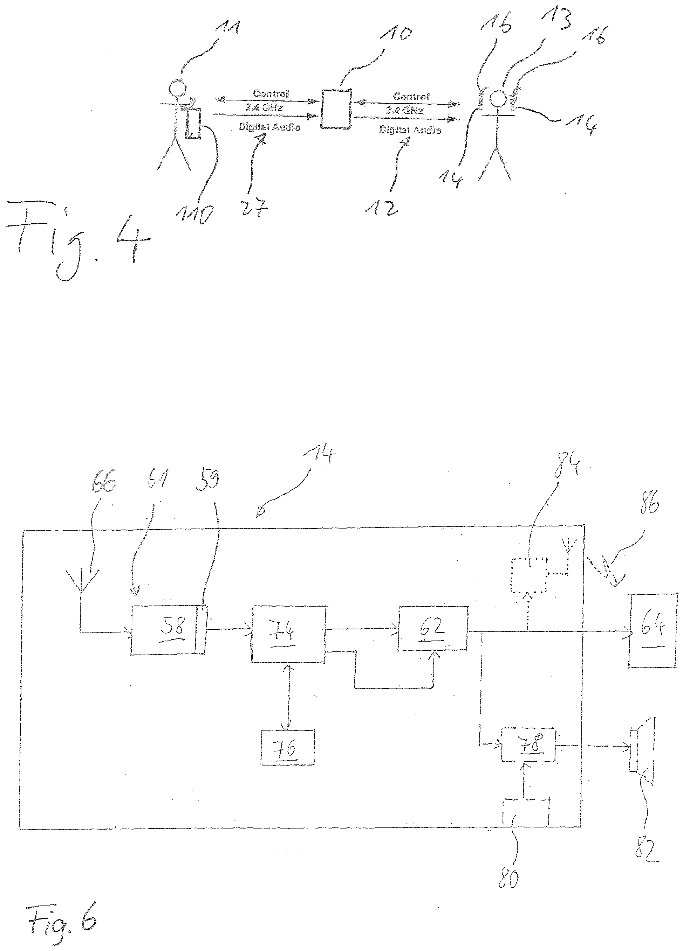

A modification of the use case of Fig. 3 is shown in Fig. 4, wherein the transmission unit 10 is used as a relay for relaying audio signals received from a remote transmission unit 110 to the receiver units 14 of the hearing-impaired person 13. The remote transmission unit 110 is worn by a speaker 11 and comprises a microphone for capturing the voice of the speaker 11, thereby acting as a companion microphone.

According to a variant of the embodiments shown in Figs. 2 to 4 the receiver units 14 could be designed as a neck-worn device comprising a transmitter for transmitting the received audio signals via an inductive link to an ear-worn device, such as a hearing aid.

The transmission units 10, 110 may comprise an audio input for a connection to an audio device, such as a mobile phone, a FM radio, a music player, a telephone or a TV device, as an external audio signal source.

In each of such use cases the transmission unit 10 usually comprises an audio signal processing unit (not shown in Figs. 2 to 4) for processing the audio signals captured by the microphone prior to being transmitted.

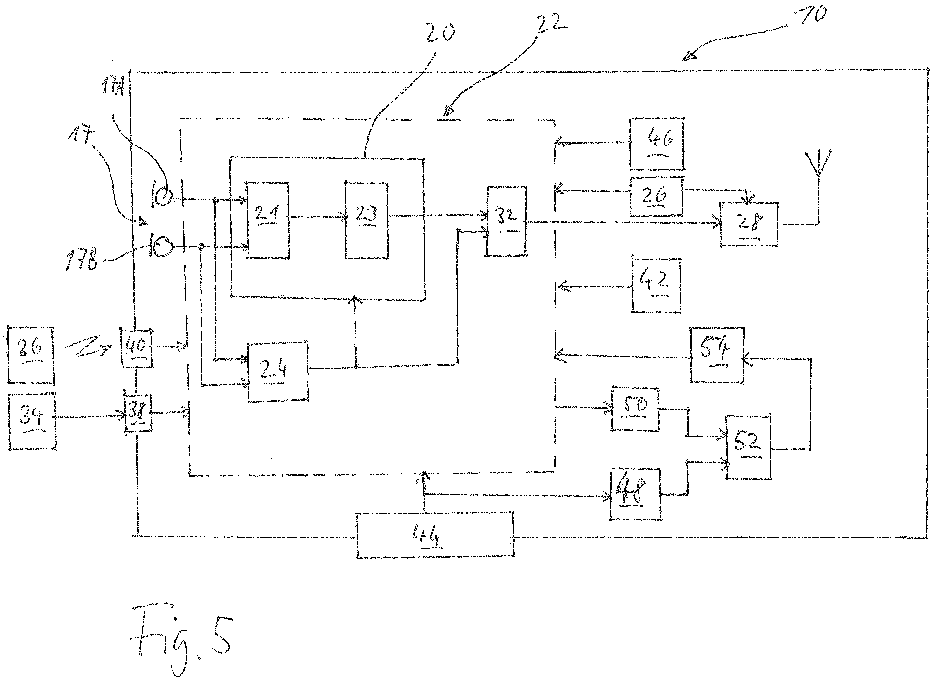

An example of a transmission unit 10 is shown in Fig. 5, which comprises a microphone arrangement 17 for capturing audio signals from the respective speaker's 11 voice, an audio signal processing unit 20 for processing the captured audio signals, a digital transmitter 28 and an antenna 30 for transmitting the processed audio signals as an audio stream 19 consisting of audio data packets. The audio signal processing unit 20 serves to compress the audio data using an appropriate audio codec, as it is known in the art. The compressed audio stream 19 forms part of a digital audio link 12 established between the transmission units 10 and the receiver unit 14, which link also serves to exchange control data packets between the transmission unit 10 and the receiver unit 14.

The transmission units 10 also may include a classifier unit 24 for analyzing the audio signals captured by the microphone arrangement 17 in order to determine the presently prevailing auditory scene category. The classifier unit 24 generates a corresponding output signal which serves to control the operation of the transmission unit 10 and/or the receiver unit 14 according to the determined auditory scene category. In the example shown in Fig. 5 the classifier unit 24 is implemented as a voice activity detector (VAD) (in this case, the auditory scene categories would be "voice on" and "voice off').

The audio signal processing unit 20 and other components, such as the classifier unit / VAD 24 may be implemented by a digital signal processor (DSP) indicated at 22. In addition, the transmission units 10 also may comprise a microcontroller 26 acting on the DSP 22 and the transmitter 28. The microcontroller 26 may be omitted in case that the DSP 22 is able to take over the function of the microcontroller 26.

Preferably, the microphone arrangement 17 comprises at least two spaced-apart microphones 17A, 17B, the audio signals of which may be used in the audio signal processing unit 20 for acoustic beamforming by a beamformer 21 in order to provide the microphone arrangement 17 with a directional characteristic. The output audio signal of the beamformer 21 is supplied to a gain model unit 23 which applies, for example, an automatic gain control (AGC) function to the audio signals.

Typically, a plurality of audio signal processing modes will be implemented in the transmission unit 10 and/or in the receiver unit 14.

The VAD 24 uses the audio signals from the microphone arrangement 17 as an input in order to determine the times when the person 11 using the respective transmission unit 10 is speaking. The VAD 24 may provide a corresponding control output signal to the microcontroller 26 in order to have, for example, the transmitter 28 sleep during times when no voice is detected and to wake up the transmitter 28 during times when voice activity is detected. In addition, a control command corresponding to the output signal of the VAD 24 may be generated and transmitted via the wireless link 12 in order to mute the receiver units 14 or saving power when the user 11 of the transmission unit 10 does not speak. To this end, a unit 32 is provided which serves to generate a digital signal comprising the audio signals from the processing unit 20 and the control data generated by the VAD 24, which digital signal is supplied to the transmitter 28. In addition to the VAD 24, the transmission unit 10 may comprise an ambient noise estimation unit (not shown in Fig. 5) which serves to estimate the ambient noise level and which generates a corresponding output signal which may be supplied to the unit 32 for being transmitted via the wireless link 12.

According to one embodiment, the transmission units 10 may be adapted to be worn by the respective speaker 11 below the speaker's neck, for example as a lapel microphone or as a shirt collar microphone.

The transmission unit 10 also may comprise inputs for audio signals supplied by external audio sources 34 and 36, such as a plug-in interface 38 and/or a wireless interface 40, such as a Bluetooth interface. Such external audio sources 34, 36 may be, for example, a phone, a mobile phone, a music player, a computer or a TV set. In particular, by providing such interfaces 38, 40 a plurality of audio signal input channels to the transmission unit 10 are realized.

The transmission unit 10 also may comprise a sensor 42 for determining the orientation and/or acceleration of the transmission unit 10, the output signal of which may be used for estimating the present use situation of the transmission unit 10 (for example, wearing the transmission unit 10 around the neck or holding it in the hand will produce different sensor signals than placing it on a table).

The transmission unit 10 also comprises a user interface 44 in order to allow the user to control operation of the transmission unit 10. For example, by acting on the user interface 44, the transmission unit 10 may be switched on and off, at least one audio signal input channel may be selected from a plurality of audio signal input channels, at least one parameter of the audio signal processing in the transmission unit 10 and/or in the receiver unit 14 may be set or a certain audio signal processing mode may be selected, at least one parameter of the wireless link 12 may be set (e.g. the frequencies) and/or remote control commands to be transmitted to the receiver unit 14 may be created. Such control commands may comprise the creation of a polling command for requesting the receiver unit 14 to send status information data regarding operation of the receiver unit 14 from the receiver unit 14 to the transmission unit 10 in order to monitor the status of the receiver unit 14. Such status information may include signal strength of the wireless link, the presence and the extent of interfering signals, the battery status of the receiver unit 14 and/or the proper functioning of the loudspeakers connected to or included in the receiver unit 14. Such control commands also may include the volume setting in the receiver unit 14.

The transmission unit 10 also includes a memory 46 for storing default values of the setting of operation parameters of the transmission unit 10. Such default values may include the selection of the audio signal input channels, the setting of at least one parameter of the audio signal processing in the transmission unit 10 and/or in the receiver unit 14, in particular the default audio signal processing mode of the transmission unit 10 and/or the receiver unit 14 and/or a default volume setting in the receiver unit 14, and/or the setting of at least one parameter of the wireless link 12, such as a default frequency.

The transmission unit 10 also comprises user interface data logging unit 48 for recording data concerning the manual operation of the user interface 44 and a use situation data logging unit 50 for recording data concerning the use situation of the transmission unit 10. The data logging units 48 and 50 serve to record both the manual operation of the user interface 44 by the user and the respective use situation of the transmission unit 10 prevailing at the time when the user interface 44 is operated by the user. The data logged in the units 48 and 50 is supplied to an evaluation unit 52 where the logged user preference data (i.e. the logged user interface data and the logged use situation data) is evaluated in order to extract user preferences concerning the use of the transmission unit 10. The output of the evaluation unit 52 is supplied to a default setting unit 54 which is provided for adjusting the stored default setting values according to the extracted user preferences.

Typically, the evaluation unit 52 is designed such that the default value setting is not changed until a certain level of likelihood has been reached that the user preferences actually have changed.

An example of a digital receiver unit 14 is shown in Fig. 6, according to which the antenna arrangement 38 is connected to a digital transceiver 61 including a demodulator 58 and a buffer 59. The signals transmitted via the digital link 12 are received by the antenna 66 and are demodulated in the digital radio receivers 61. The demodulated signals are supplied via the buffer 59 to a DSP 74 acting as processing unit which separates the signals into the audio signals and the control data and which is provided for advanced processing, e.g. equalization, of the audio signals according to the information provided by the control data. The receiver unit 14 also includes a memory 76 for the DSP 74. The processed audio signals, after digital-to-analog conversion, are supplied to a variable gain amplifier 62 which serves to amplify the audio signals by applying a gain controlled by the control data received via the digital link 12. The amplified audio signals are supplied to the audio input of a hearing aid 64. The receiver unit 14 preferably is designed to allow the user of the receiver unit 14 to select between the audio output of the receiver unit and the microphone arrangement of the hearing aid 64 as the audio signal input to be processed and provided as processed audio signals to the hearing aid speaker.

Rather than supplying the audio signals amplified by the variable gain amplifier 62 to the audio input of a hearing aid 64, the receiver unit 14 may include a power amplifier 78 which may be controlled by a manual volume control 80 and which supplies power amplified audio signals to a loudspeaker 82 which may be an ear-worn element integrated within or connected to the receiver unit 14. Volume control also could be done remotely from the transmission unit 10 by transmitting corresponding control commands to the receiver unit 14.

Another alternative implementation of the receiver unit may be a neck-worn device having a transmitter 84 for transmitting the received signals via with an magnetic induction link 86 (analog or digital) to the hearing aid 64 (as indicated by dotted lines in Fig. 6).

## Claims

1. A method of operating a system for providing hearing assistance to a user (13) of a receiver unit (14), comprising:
(a) capturing audio signals by a transmission unit (10, 110) comprising a user interface (44) for a user (11, 13) of the transmission unit for manual control of the transmission unit and means (46) for storing default values of the setting of at least one operating parameter of the transmission unit, and transmitting the audio signals from the transmission unit via a wireless audio link (12) to a receiver unit (14), with the audio signals being processed in the receiver unit and/or in the transmission unit;
(b) stimulating, via stimulation means (64, 82), the hearing of the user of the receiver unit according to the audio signals from the receiver unit;
(c) logging user preference data of the user of the transmission unit by recording data concerning the manual operation of the user interface of the transmission unit and by recording data concerning the respective use situation of the transmission unit;
(d) evaluating, in the transmission unit, the logged user preference data in order to extract user preferences concerning the use of the transmission unit; and
(e) adjusting, in the transmission unit, the stored default values of the setting of said at least one operating parameter of the transmission unit according to said extracted user preferences.

2. The method of claim 1, wherein said data concerning the use situation of the transmission unit (10, 110) comprises the result of an auditory scene analysis performed in the transmission unit by a classification unit (24) based on the captured audio signals in order to determine a present auditory scene category from a plurality of auditory scene categories, control commands for controlling operation of the receiver unit (14) generated in the transmission unit as a result of an auditory scene analysis performed in the transmission unit and transmitted from the transmission unit via a wireless data link to the receiver unit, control commands for controlling operation of the transmission unit generated in the transmission unit as a result of an auditory scene analysis performed in the transmission unit, audio signal input channel(s) as selected in the transmission unit, a measured orientation of the transmission unit, and/or a measured acceleration of the transmission unit.

3. The method of claim 2, wherein the control commands include parameter settings for the processing of the received audio signals in the receiver unit (14), and wherein the logged data includes the transmitted settings of the parameters for the processing of the received audio signals in the receiver unit, such as the value of the gain to be applied to the audio signals in the receiver unit.

4. The method of one of the claims 2 and 3, wherein the logged data includes the ambient acoustical noise level and/or a time-averaged signal to noise ratio and/or at least one parameter used in the audio signal processing performed in the transmission unit (10, 110), such as an acoustic beam forming parameter.

5. The method of one of the preceding claims, wherein said data concerning the operation of the user interface (44) comprises on/off-switching of the transmission unit (10, 110), the selection of at least one audio signal input channel from a plurality of audio signal input channels, setting of at least one parameter of the audio signal processing in the transmission unit and/or in the receiver unit (14), setting of at least one parameter of the wireless audio link (12) and/or creation of remote control commands for the receiver unit, wherein the audio signal processing in the transmission unit (10, 110) and/or in the receiver unit (14) is carried out according to one mode manually selected by the user from a plurality of audio signal processing modes, and wherein the logged data includes the presently selected mode.

6. The method of claim 5, wherein the transmission unit (10, 110) comprises means (38, 40) for receiving audio signals from an external audio signal source (34, 36) for capturing said audio signals, and wherein the user interface (44) is adapted to select at least one audio signal input channel from a plurality of audio signal input channels, and wherein said external audio signal source (34, 36) is a phone, a mobile phone, a music player, a computer and/or a TV set.

7. The method of claim 6, wherein said means for receiving audio signals from an external audio signal source comprise a Bluetooth interface (40) and/or a plug connector (38).

8. The method of one of claims 5 to 7, wherein the control commands comprise the creation of a polling command for requesting the receiver unit (14) to send status information data regarding operation of the receiver unit from the receiver unit to the transmission unit (10, 110) order to monitor the status of the receiver unit, and wherein the status information data includes at least one of the signal strength of the audio link (12), the presence and the extent of interfering signals, the battery status of the receiver unit (14) and the proper functioning of the stimulating means (82).

9. The method of one of the preceding claims, wherein said default values of said of at least one operating parameter of the transmission unit (10, 110) comprises the selection of the audio signal input channel(s), the setting of at least one parameter of the audio signal processing in the transmission unit and/or in the receiver unit, and/or the setting of at least one parameter of the wireless audio link (12), and wherein said default values of said of at least one operating parameter of the transmission unit (10, 110) comprises the default audio signal processing mode of the transmission unit (14) and/or the receiver unit, a default volume setting in the receiver unit and/or a default frequency of the wireless audio link (12).

10. The method of one of the preceding claims, wherein the audio signals are captured by a microphone arrangement (17) of the transmission unit (10, 110).

11. The method of one of the preceding claims, wherein the user's hearing is stimulated according to the processed audio signals from the receiver unit (14) by stimulating means (64, 82) worn at or in the ear of the user of the receiver unit.

12. The method of one of the preceding claims, wherein the transmission unit (10, 110) is a remote device used spaced apart from the user (13) of the receiver unit (14) by another person (11) or is a device which is worn at the body of the user (13) of the receiver unit spaced apart from the head of the user of the receiver unit and used by the user of the receiver unit (14).

13. The method of one of the preceding claims, wherein an audio output of the receiver unit (14) is connected to an audio input of a hearing instrument (64) comprising the stimulation means and a microphone arrangement, wherein the receiver unit (14) is designed to allow the user (13) of the receiver unit to select between the audio output of the receiver unit and the microphone arrangement of the hearing instrument (64) as the audio signal input to be processed and provided as processed audio signals to the stimulation means.

14. The method of one of claims 1 to 12, wherein the receiver unit (14) comprises the stimulation means (82) or is integrated within a hearing instrument comprising the stimulation means.

15. A system for providing hearing assistance to a user (13) of a receiver unit (14), comprising: a transmission unit (10, 110) for capturing audio signals and transmitting the audio signals via a wireless audio link (12), the transmission unit comprising a user interface (44) for user control of the transmission unit by a user (11, 13) of the transmission unit and means (46) for storing default values of the setting of at least one operating parameter of the transmission unit; the receiver unit (14) for receiving the audio signals from the transmission unit via the wireless link; stimulating means (64, 82) for stimulating the hearing of the user of the receiver unit according to the audio signals from the receiver unit; means (48, 50) for logging, in the transmission unit, user preference data of the user of the transmission unit by recording data concerning the manual operation of the user interface of the transmission unit and by recording data concerning the respective use situation of the transmission unit; means (52) for evaluating, in the transmission unit, the logged user preference data in order to extract user preferences concerning the use of the transmission unit; and means (22, 54) for adjusting, in the transmission unit, the stored default values of the setting of said at least one operating parameter of the transmission unit according to said extracted user preferences, wherein at least one of the transmission unit and the receiver unit comprises audio signal processing means (20, 62, 74).

## Patentansprüche

1. Verfahren zum Betreiben eines Systems zur Hörunterstützung eines Nutzers (13) einer Empfängereinheit (14), wobei:
(a) Audiosignale mittels einer Sendeeinheit (10, 110) aufgefangen werden, die eine Benutzeroberfläche (44) für einen Nutzer (11, 13) der Sendeeinheit zur manuellen Steuerung der Sendeeinheit sowie Mittel (46) zum Speichern von voreingestellten Werten der Einstellung mindestens eines Betriebsparameters der Sendeeinheit aufweist, und die Audiosignale von der Sendeeinheit über eine drahtlose Audioverbindung (12) zu einer Empfängereinheit (14) gesendet werden, wobei die Audiosignale in der Empfängereinheit und/oder in der Sendeeinheit verarbeitet werden;
(b) das Gehör des Nutzers der Empfängereinheit mittels Stimulationsmitteln (64, 82) gemäß den Audiosignalen von der Empfängereinheit stimuliert wird;
(c) Nutzerpräferenzdaten des Nutzers der Sendeeinheit aufgezeichnet werden, indem Daten betreffend die manuelle Bedienung der Benutzeroberfläche der Sendeeinheit aufgezeichnet werden und indem Daten betreffend die jeweilige Nutzungssituation der Sendeeinheit aufgezeichnet werden;
(d) die aufgezeichneten Nutzerpräferenzdaten in der Sendeeinheit evaluiert werden, um Nutzerpräferenzen betreffend die Verwendung der Sendeeinheit zu extrahieren; und
(e) die gespeicherten voreingestellten Werte der Einstellung des mindestens einen Betriebsparameters der Sendeeinheit in der Sendeeinheit gemäß den extrahierten Nutzerpräferenzen eingestellt werden.

2. Verfahren gemäß Anspruch 1, wobei die Daten betreffend die Nutzungssituation der Sendeeinheit (10, 117) das Ergebnis einer in der Sendeeinheit mittels einer Klassifizierungseinheit (24) basierend auf den aufgefangenen Audiosignalen (6) durchgeführten Hörumgebungsanalyse zwecks Bestimmung einer vorliegenden Hörumgebungskategorie aus einer Mehrzahl von Hörumgebungskategorien, Steuerbefehle zum Steuern des Betriebs der Empfängereinheit (14), die in der Sendeeinheit als Ergebnis einer in der Sendeeinheit durchgeführten Hörumgebungsanalyse erzeugt wurden und von der Sendeeinheit über eine drahtlose Datenverbindung zu der Empfängereinheit gesendet wurden, Steuerbefehle zum Steuern des Betriebs der Sendeeinheit, die in der Sendeeinheit als Ergebnis einer in der Sendeeinheit ausgeführten Hörumgebungsanalyse erzeugt wurden, mindestens einen in der Sendeeinheit ausgewählten Audiosignal-Eingangskanal, eine gemessene Orientierung der Sendeeinheit und/oder eine gemessene Beschleunigung der Sendeeinheit umfassen.

3. Verfahren gemäß Anspruch 2, wobei die Steuerbefehle Parametereinstellungen für das Verarbeiten der empfangenen Audiosignale in der Empfängereinheit (14) beinhalten, und wobei die aufgezeichneten Daten die gesendeten Einstellungen der Parameter zum Verarbeiten der empfangenen Audiosignale in der Empfängereinheit beinhalten, wie beispielsweise den Wert der auf die Audiosignale in der Empfängereinheit anzuwendenden Verstärkung.

4. Verfahren gemäß einem der Ansprüche 2 und 3, wobei die aufgezeichneten Daten den akustischen Umgebungsrauschpegel und/oder ein zeitgemitteltes Signal-Rauschverhältnis und/oder mindestens einen bei der Audiosignalverarbeitung, die in der Sendeeinheit (10, 110) ausgeführt wird, verwendeten Parameter, wie beispielsweise einen akustischen Beamforming-Parameter, aufweisen.

5. Verfahren gemäß einem der vorhergehenden Ansprüche, wobei die Daten betreffend den Betrieb der Benutzeroberfläche (44) das Einschalten bzw. Ausschalten der Sendeeinheit (10, 110), die Auswahl mindestens eines Audiosignal-Eingangskanals aus einer Mehrzahl von Audiosignal-Eingangskanälen, das Einstellen von mindestens einem Parameter der Audiosignalverarbeitung in der Sendeeinheit und/oder in der Empfängereinheit (14), das Einstellen von mindestens einem Parameter der drahtlosen Audioverbindung (12) und/oder das Erzeugen von Fernsteuerbefehlen für die Empfängereinheit aufweisen, wobei die Audiosignalverarbeitung in der Sendeeinheit (10, 110) und/oder in der Empfängereinheit (14) gemäß einem manuell von dem Nutzer aus einer Mehrzahl von Audiosignalverarbeitungsmodi ausgewählten Modus ausgeführt wird, und wobei die aufgezeichneten Daten den momentan ausgewählten Modus beinhalten.

6. Verfahren gemäß Anspruch 5, wobei die Sendeeinheit (10, 110) Mittel (38, 40) zum Empfangen von Audiosignalen aus einer externen Audiosignalquelle (34, 36) zwecks Auffangen der Audiosignale beinhaltet, und wobei die Benutzeroberfläche (44) ausgebildet ist, um mindestens einen Audiosignal-Eingangskanal aus einer Mehrzahl von Audiosignal-Eingangskanälen auszuwählen, und wobei es sich bei der externen Audiosignalquelle (34, 36) um ein Telefon, ein Mobiltelefon, ein Musikabspielgerät, einen Computer und/oder ein TV-Set handelt.

7. Verfahren gemäß Anspruch 6, wobei die Mittel zum Empfangen von Audiosignalen aus einer externen Audiosignalquelle eine Bluetooth-Schnittstelle (40) und/oder eine Steckverbindung (38) aufweisen.

8. Verfahren gemäß einem der Ansprüche 5 bis 7, wobei die Steuerbefehle das Erzeugen eines Abfragebefehls beinhalten, um die Empfängereinheit (14) aufzufordern, Statusinformationsdaten betreffend den Betrieb der Empfängereinheit von der Empfängereinheit zu der Sendeeinheit (10, 110) zu senden, um den Status der Empfängereinheit zu überwachen, und wobei die Statusinformationsdaten die Signalstärke der Audioverbindung (12), die Anwesenheit und das Ausmaß von Störsignalen, den Batteriestatus der Empfängereinheit (14) und/oder das ordnungsgemäße Funktionieren der Stimulationsmittel (82) beinhalten.

9. Verfahren gemäß einem der vorhergehenden Ansprüche, wobei die voreingestellten Werte des mindestens einen Betriebsparameters der Sendeeinheit (10, 110) die Auswahl des mindestens einen Audiosignal-Eingangskanals, die Einstellung des mindestens einen Parameters der Audiosignalverarbeitung in der Sendeeinheit und/oder der Empfängereinheit,
und/oder die Einstellung des mindestens einen Parameters der drahtlosen Audioverbindung (12) umfassen, und wobei die voreingestellten Werte des mindestens einen Betriebsparameters der Sendeeinheit (10, 110) den voreingestellten Audiosignal-Verarbeitungsmodus der Sendeeinheit (14) und/oder der Empfängereinheit, eine voreingestellte Lautstärkeeinstellung in der Empfängereinheit und/oder eine voreingestellte Frequenz der drahtlosen Audioverbindung (12) umfasst.

10. Verfahren gemäß einem der vorhergehenden Ansprüche, wobei die Audiosignale mittels einer Mikrofonanordnung (17) der Sendeeinheit (10, 110) aufgefangen werden.

11. Verfahren gemäß einem der vorhergehenden Ansprüche, wobei das Gehör des Nutzers von der Empfängereinheit (14) gemäß den verarbeiteten Audiosignalen mittels Stimulationsmitteln (64, 82) stimuliert wird, die an oder in dem Ohr des Nutzers der Empfängereinheit getragen werden.

12. Verfahren gemäß einem der vorhergehenden Ansprüche, wobei es sich bei der Sendeeinheit (10, 110) um ein entferntes Gerät handelt, welches in Abstand von dem Nutzer (13) der Empfängereinheit (14) von einer anderen Person (11) verwendet wird, oder es sich um ein Gerät handelt, welches an dem Körper des Nutzers (13) der Empfängereinheit in Abstand von dem Kopf des Nutzers der Empfängereinheit getragen wird und von dem Nutzer der Empfängereinheit (14) verwendet wird.

13. Verfahren gemäß einem der vorhergehenden Ansprüche, wobei ein Audioausgang der Empfängereinheit (14) mit einem Audioeingang eines Hörgeräts (64) verbunden ist, welches die Stimulationsmittel und eine Mikrofonanordnung aufweist, wobei die Empfängereinheit (14) ausgebildet ist, um es dem Nutzer (13) der Empfängereinheit zu erlauben, zwischen dem Audioausgang der Empfängereinheit und der Mikrofonanordnung des Hörgeräts (64) als die Audiosignaleingabe auszuwählen, die verarbeitet und als verarbeitete Audiosignale den Stimulationsmitteln zugeführt wird.

14. Verfahren gemäß einem der Ansprüche 1 bis 12, wobei die Empfängereinheit (14) die Stimulationsmittel (82) aufweist oder in ein Hörgerät integriert ist, welches die Stimulationsmittel aufweist.

15. System zur Hörunterstützung eines Nutzers (13) einer Empfängereinheit (14), mit:
einer Sendeeinheit (10, 110) zum Auffangen von Audiosignalen und zum Senden der Audiosignale über eine drahtlose Audioverbindung (12), wobei die Sendeeinheit eine Benutzeroberfläche (44) zur Nutzersteuerung der Sendeeinheit durch einen Nutzer (11, 13) der Sendeeinheit sowie Mittel (46) zum Speichern von voreingestellten Werten der Einstellung mindestens eines Betriebsparameters der Sendeeinheit aufweist; der Empfängereinheit (14) zum Empfangen der Audiosignale von der Sendeeinheit über die drahtlose Verbindung;
Stimulationsmitteln (64, 82) zum Stimulieren des Gehörs des Nutzers der Empfängereinheit gemäß den Audiosignalen von der Empfängereinheit; und
Mitteln (48, 50) zum Aufzeichnen von Nutzerpräferenzdaten des Nutzers der Sendeeinheit in der Sendeeinheit, indem Daten betreffend den manuellen Betrieb der Benutzeroberfläche der Sendeeinheit aufgezeichnet werden und indem Daten betreffend die jeweilige Nutzungssituation der Sendeeinheit aufgezeichnet werden;
Mitteln zum Evaluieren der aufgezeichneten Nutzerpräferenzdaten in der Sendeeinheit, um Nutzerpräferenzen betreffend die Nutzung der Sendeeinheit zu extrahieren; und Mitteln (22, 54) zum Einstellen der gespeicherten voreingestellten Werte der Einstellung des mindestens einen Betriebsparameters der Sendeeinheit in der Sendeeinheit gemäß den extrahierten Nutzerpräferenzen, wobei die Sendeeinheit und/oder die Empfängereinheit Audiosignalverarbeitungsmittel (20, 62, 74) aufweist bzw. aufweisen.

## Revendications

1. Procédé de fonctionnement d'un système pour fournir une aide auditive à un utilisateur (13) d'une unité de réception (14), comprenant les étapes suivantes :
(a) capturer des signaux audio par une unité de transmission (10, 110) comprenant une interface utilisateur (44) pour un utilisateur (11, 13) de l'unité de transmission pour le contrôle manuel de l'unité de transmission et des moyens (46) pour stocker des valeurs par défaut du réglage d'au moins un paramètre de fonctionnement de l'unité de transmission, et transmettre les signaux audio de l'unité de transmission à une unité de réception (14) par l'intermédiaire d'une liaison audio sans fil (12), les signaux audio étant traités dans l'unité de réception et/ou dans l'unité de transmission ;
(b) stimuler, par l'intermédiaire de moyens de stimulation (64, 82), l'audition de l'utilisateur de l'unité de réception en fonction des signaux audio provenant de l'unité de réception ;
(c) enregistrer les données de préférence de l'utilisateur de l'unité de transmission en enregistrant les données concernant le fonctionnement manuel de l'interface utilisateur de l'unité de transmission et en enregistrant les données concernant la situation d'utilisation respective de l'unité de transmission ;
(d) évaluer, dans l'unité de transmission, les données de préférence de l'utilisateur enregistrées afin d'extraire les préférences de l'utilisateur concernant l'utilisation de l'unité de transmission ; et
(e) ajuster, dans l'unité de transmission, les valeurs par défaut stockées du réglage dudit au moins un paramètre de fonctionnement de l'unité de transmission en fonction desdites préférences de l'utilisateur extraites.

2. Procédé selon la revendication 1, dans lequel lesdites données concernant la situation d'utilisation de l'unité de transmission (10, 110) comprennent le résultat d'une analyse de scène auditive effectuée dans l'unité de transmission par une unité de classification (24) sur la base des signaux audio capturés afin de déterminer une catégorie de scène auditive courante parmi une pluralité de catégories de scènes auditives, des commandes de contrôle pour contrôler le fonctionnement de l'unité de réception (14) générées lors de la transmission à la suite d'une analyse de la scène auditive effectuée dans l'unité de transmission et transmises de l'unité de transmission à l'unité de réception par l'intermédiaire d'une liaison de données sans fil, des commandes de contrôle pour contrôler le fonctionnement de l'unité de transmission générées dans la transmission à la suite d'une analyse de la scène auditive effectuée dans l'unité de transmission, un ou plusieurs canaux d'entrée de signaux audio tels que sélectionnés dans l'unité de transmission, une orientation mesurée de l'unité de transmission et/ou une accélération mesurée de l'unité de transmission.

3. Procédé selon la revendication 2, dans lequel les commandes de contrôle comprennent des réglages de paramètres pour le traitement des signaux audio reçus dans l'unité de réception (14), et où les données enregistrées comprennent les réglages transmis des paramètres pour le traitement des signaux audio reçus dans l'unité de réception, tels que la valeur du gain à appliquer aux signaux audio dans l'unité de réception.

4. Procédé selon l'une des revendications 2 et 3, dans lequel les données enregistrées comprennent le niveau de bruit acoustique ambiant et/ou un rapport signal/bruit moyenné dans le temps et/ou au moins un paramètre utilisé dans le traitement des signaux audio effectué dans l'unité de transmission (10, 110), tel qu'un paramètre de formation de faisceau acoustique.

5. Procédé selon l'une des revendications précédentes, dans lequel lesdites données concernant le fonctionnement de l'interface utilisateur (44) comprennent la mise en marche/l'arrêt de l'unité de transmission (10, 110), la sélection d'au moins un canal d'entrée de signaux audio parmi une pluralité de canaux d'entrée de signaux audio, le réglage d'au moins un paramètre du traitement du signal audio dans l'unité de transmission et/ou dans l'unité de réception (14), le réglage d'au moins un paramètre de la liaison audio sans fil (12) et/ou la création de commandes de contrôle à distance pour l'unité de réception, où le traitement du signal audio dans l'unité de transmission (10, 110) et/ou dans l'unité de réception (14) est effectué selon un mode sélectionné manuellement par l'utilisateur parmi une pluralité de modes de traitement du signal audio, et où les données enregistrées comprennent le mode actuellement sélectionné.

6. Procédé selon la revendication 5, dans lequel l'unité de transmission (10, 110) comprend des moyens (38, 40) pour recevoir des signaux audio provenant d'une source de signaux audio externe (34, 36) pour capturer lesdits signaux audio, et où l'interface utilisateur (44) est adaptée pour sélectionner au moins un canal d'entrée de signaux audio parmi une pluralité de canaux d'entrée de signaux audio, et où ladite source de signaux audio externe (34, 36) est un téléphone, un téléphone mobile, un lecteur de musique, un ordinateur et/ou un téléviseur.

7. Procédé selon la revendication 6, dans lequel lesdits moyens pour recevoir des signaux audio d'une source de signaux audio externe comprennent une interface Bluetooth (40) et/ou un connecteur enfichable (38) .

8. Procédé selon l'une des revendications 5 à 7, dans laquelle les commandes de contrôle comprennent la création d'une commande de sondage pour demander à l'unité de réception (14) d'envoyer des données d'information d'état concernant le fonctionnement de l'unité de réception, depuis l'unité de réception à l'unité de transmission (10, 110), afin de surveiller l'état de l'unité de réception, et où les données d'information d'état comprennent au moins l'un des éléments suivants : la force du signal de la liaison audio (12), la présence et l'importance des signaux d'interférence, l'état de la batterie de l'unité de réception (14) et le bon fonctionnement des moyens de stimulation (82).

9. Procédé selon l'une des revendications précédentes, dans lequel lesdites valeurs par défaut dudit au moins un paramètre de fonctionnement de l'unité de transmission (10, 110) comprennent la sélection du/des canaux d'entrée de signaux audio, le réglage d'au moins un paramètre du traitement des signaux audio dans l'unité de transmission et/ou dans l'unité de réception, et/ou le réglage d'au moins un paramètre de la liaison audio sans fil (12), et où lesdites valeurs par défaut dudit au moins un paramètre de fonctionnement de l'unité de transmission (10, 110) comprennent le mode de traitement des signaux audio par défaut de l'unité de transmission (14) et/ou de l'unité de réception, un réglage de volume par défaut dans l'unité de réception et/ou une fréquence par défaut de la liaison audio sans fil (12).

10. Procédé selon l'une des revendications précédentes, dans lequel les signaux audio sont capturés par un agencement de microphone (17) de l'unité de transmission (10, 110).

11. Procédé selon l'une des revendications précédentes, dans lequel l'audition de l'utilisateur est stimulée en fonction des signaux audio traités provenant de l'unité de réception (14) par des moyens de stimulation (64, 82) portés à l'oreille ou dans l'oreille de l'utilisateur de l'unité de réception.

12. Procédé selon l'une des revendications précédentes, dans lequel l'unité de transmission (10, 110) est un dispositif distant utilisé à distance de l'utilisateur (13) de l'unité de réception (14) par une autre personne (11) ou est un dispositif qui est porté sur le corps de l'utilisateur (13) de l'unité de réception à distance de la tête de l'utilisateur de l'unité de réception et utilisé par l'utilisateur de l'unité de réception (14).

13. Procédé selon l'une des revendications précédentes, dans lequel une sortie audio de l'unité de réception (14) est connectée à une entrée audio d'une aide auditive (64) comprenant les moyens de stimulation et un agencement de microphone, où l'unité de réception (14) est conçue pour permettre à l'utilisateur (13) de l'unité de réception d'effectuer une sélection entre la sortie audio de l'unité de réception et l'agencement de microphone de l'aide auditive (64) comme entrée de signaux audio à traiter et à fournir comme signaux audio traités aux moyens de stimulation.

14. Procédé selon l'une des revendications 1 à 12, dans lequel l'unité de réception (14) comprend les moyens de stimulation (82) ou est intégrée dans une aide auditive comprenant les moyens de stimulation.

15. Système pour fournir une aide auditive à un utilisateur (13) d'une unité de réception (14), comprenant : une unité de transmission (10, 110) pour capturer des signaux audio et transmettre les signaux audio par l'intermédiaire d'une liaison audio sans fil (12), l'unité de transmission comprenant une interface utilisateur (44) pour le contrôle utilisateur de l'unité de transmission par un utilisateur (11, 13) de l'unité de transmission et des moyens (46) pour stocker des valeurs par défaut du réglage d'au moins un paramètre de fonctionnement de l'unité de transmission, l'unité de réception (14) étant destinée à recevoir les signaux audio de l'unité de transmission par l'intermédiaire de la liaison sans fil ; des moyens de stimulation (64, 82) pour stimuler l'audition de l'utilisateur de l'unité de réception en fonction des signaux audio provenant de l'unité de réception ; et des moyens (48, 50) pour enregistrer, dans l'unité de transmission, les données de préférence d'utilisateur de l'utilisateur de l'unité de transmission en enregistrant des données concernant le fonctionnement manuel de l'interface utilisateur de l'unité de transmission et en enregistrant des données concernant la situation d'utilisation respective de l'unité de transmission ; des moyens (52) pour évaluer, dans l'unité de transmission, les données de préférence d'utilisateur enregistrées afin d'extraire les préférences d'utilisateur concernant l'utilisation de l'unité de transmission ; et des moyens (22, 54) pour ajuster, dans l'unité de transmission, les valeurs par défaut stockées du réglage dudit au moins un paramètre de fonctionnement de l'unité de transmission en fonction desdites préférences d'utilisateur extraites, où au moins une unité parmi l'unité de transmission et l'unité de réception comprend des moyens de traitement de signaux audio (20, 62, 74).
